(19) Europäisches Patentamt
European Patent Office
Office européen des brevets

(11) **EP 4 383 908 A1**

(12) **EUROPEAN PATENT APPLICATION**
published in accordance with Art. 153(4) EPC

(43) Date of publication:
**12.06.2024 Bulletin 2024/24**

(21) Application number: **22853513.4**

(22) Date of filing: **05.08.2022**

(51) International Patent Classification (IPC):
***H04W 72/12*** *(2023.01)*   ***H04L 5/00*** *(2006.01)*
***H04L 1/18*** *(2023.01)*

(52) Cooperative Patent Classification (CPC):
**H04L 1/18; H04L 5/00; H04W 72/12**

(86) International application number:
**PCT/KR2022/011611**

(87) International publication number:
**WO 2023/014138 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021   KR 20210104056**

(71) Applicant: **LG Electronics Inc.**
**Yeongdeungpo-gu**
**Seoul 07336 (KR)**

(72) Inventors:
• **LEE, Youngdae**
**Seoul 06772 (KR)**
• **YANG, Suckchel**
**Seoul 06772 (KR)**
• **KIM, Seonwook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR GROUP-COMMON AND TERMINAL-SPECIFIC TRANSMISSION OR RECEPTION OF DOWNLINK DATA IN WIRELESS COMMUNICATION SYSTEM**

(57)   Disclosed are a method and apparatus for group-common transmission or reception of downlink data and terminal-specific transmission or reception of downlink data, in a wireless communication system. A method by which a terminal receives downlink data in a wireless communication system, according to an embodiment of the present disclosure, comprises the steps of: receiving, from a network, configuration information regarding a common frequency resource (CFR) associated with a terminal-dedicated bandwidth part (BWP) and for group-common transmission; receiving a first physical downlink shared channel (PDSCH) on the CFR, on the basis of first downlink control information (DCI); and receiving a second PDSCH on the BWP, on the basis of second DCI, wherein the receiving of the first PDSCH may include rate matching based on the CFR and the receiving of the second PDSCH may include rate matching based on the BWP.

FIG.7

```
Receive configuration information on
CFR associated with BWP           ~ S710

Transmit first PDSCH on CFR
based on first DCI                ~ S720

Transmit second PDSCH on BWP
based on second DCI               ~ S730
```

**Description**

[Technical Field]

The present disclosure relates to a wireless communication system, and more particularly, to a method and a device for group-common transmission or reception of downlink data and terminal-specific transmission or reception of downlink data in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for group-common and terminal-specific transmission or reception for downlink data in a wireless communication system.

An additional technical problem of the present disclosure is to provide a method and a device for group-common and terminal-specific transmission or reception for downlink data under a carrier aggregation (CA) or dual connectivity (DC) environment in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for receiving downlink data by a terminal in a wireless communication system according to an aspect of the present disclosure includes receiving from a network configuration information on a common frequency resource (CFR) for a group-common transmission, associated with a terminal-dedicated bandwidth part (BWP); receiving a first physical downlink shared channel (PDSCH) on the CFR based on first downlink control information (DCI); and receiving a second PDSCH on the BWP based on second DCI, and reception of the first PDSCH may include rate matching based on the CFR and reception of the second PDSCH may include rate matching based on the BWP.

A method for transmitting downlink data by a base station in a wireless communication system according to an additional aspect of the present disclosure includes transmitting to a terminal configuration information on a common frequency resource (CFR) for a group-common transmission, associated with a terminal-dedicated bandwidth part (BWP); transmitting to the terminal a first physical downlink shared channel (PDSCH) on the CFR based on first downlink control information (DCI); and transmitting to the terminal a second PDSCH on the BWP based on second DCI, and transmission of the first PDSCH may include rate matching based on the CFR and transmission of the second PDSCH may include rate matching based on the BWP.

[Technical Effects]

According to the present disclosure, a method and a device for group-common and terminal-specific transmission or reception for downlink data in a wireless communication system may be provided.

According to the present disclosure, a method and a device for group-common and terminal-specific transmission or reception for downlink data under a carrier aggregation (CA) or dual connectivity (DC) environment in a wireless communication system may be provided.

According to the present disclosure, a method and a device for performing group-common transmission without hindrance or interruption in data transmission or reception based on a common frequency resource maintained when changing a bandwidth part may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing an example of a downlink data reception method of a terminal according to the present disclosure.
FIG. 8 is a diagram for describing an example of a downlink data transmission method of a base station according to the present disclosure.
FIG. 9 is a diagram representing examples of downlink transmission to which the present disclosure may be applied.
FIG. 10 is a diagram for illustrating a signaling process of a network side and a terminal according to an embodiment of the present disclosure.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power

L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

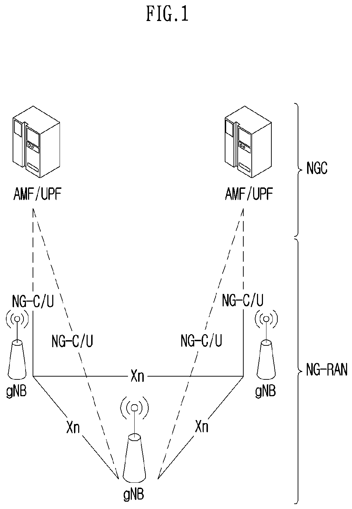

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

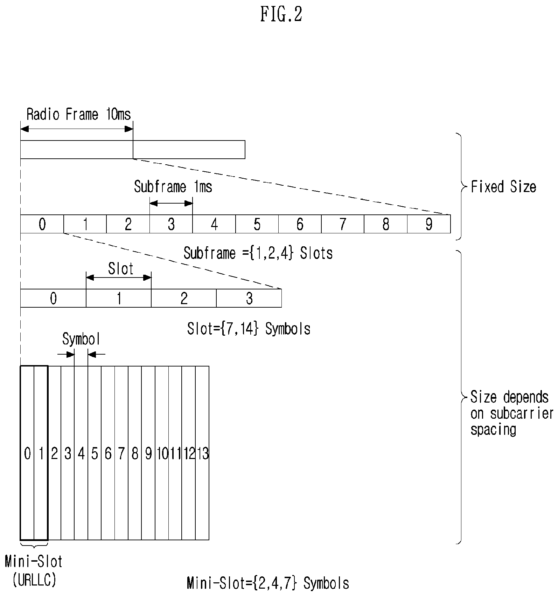

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_f/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

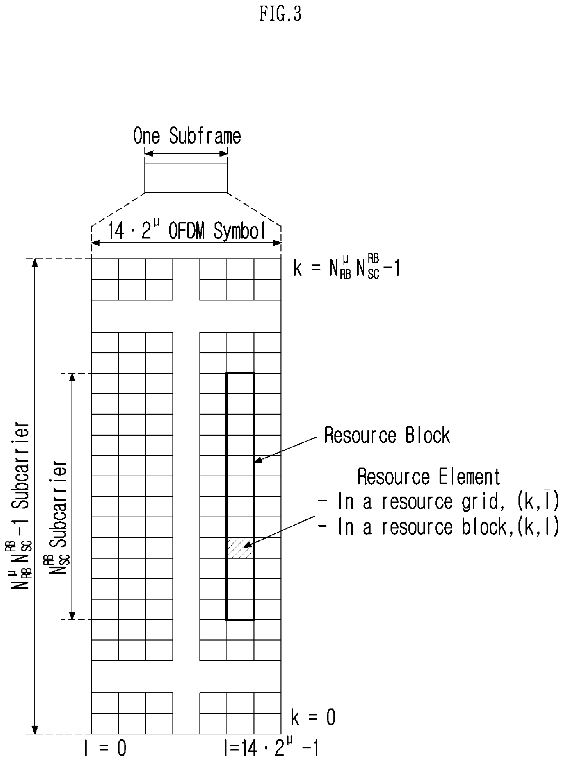

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

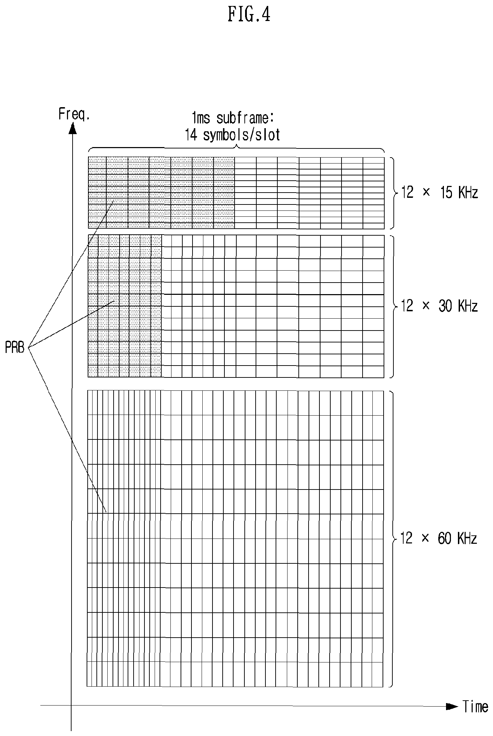

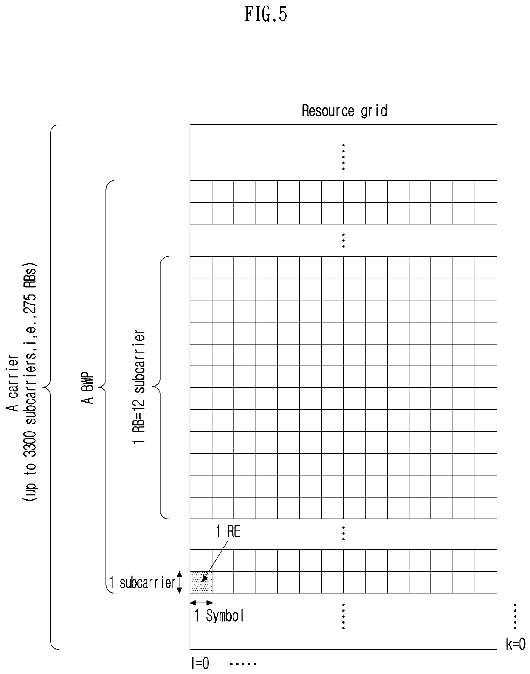

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

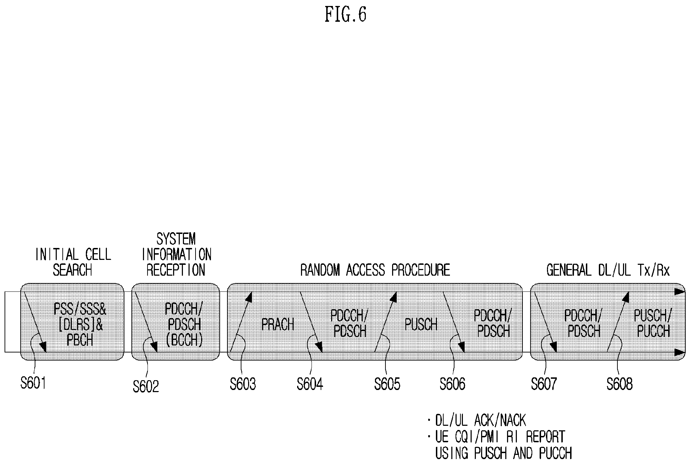

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS (Multimedia Broadcast Multicast Service)

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

SFN scheme may be used to provide a broadcast service to a wide area (e.g., MBMS area) through resources allocated semi-statically in advance. A multicast broadcast single frequency network (MBSFN) provides logical channels, a multicast control channel (MCCH) and a multicast traffic channel (MTCH), and both of the MCCH and the MTCH are mapped to a transport channel, a multicast channel (MCH), and the MCH is mapped to a physical channel, a physical multicast channel (PMCH). That is, a plurality of base stations/cells may be synchronized to provide the same data to a terminal through the PMCH. One base station/cell may belong to a plurality of MBSFN areas. In addition, it may be required to configure the MBSFN subframe for the MBSFN service.

SC-PTM scheme may be mainly used to provide a broadcast service only within a cell coverage through dynamic resources. SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting data corresponding to the SC-MCCH or SC-MTCH is scheduled through a PDCCH that is CRC scrambled with a group-radio network temporary identifier (G-RNTI). Here, a temporary mobile group identity (TMGI) corresponding to the MBMS service ID may be mapped one-to-one with a specific G-RNTI value. Accordingly, if the base station provides a plurality of MBMS services, a plurality of G-RNTI values may be allocated for SC-PTM transmission. One or more terminals may perform PDCCH monitoring using a specific G-RNTI to receive a specific MBMS service. Here, a discontinuous reception (DRX) on-duration period dedicated to SC-PTM may be configured for a specific MBMS service/specific G-RNTI. In this case, the corresponding terminals may wake up only for a specific on-duration period and perform PDCCH monitoring for the G-RNTI.

SPS (semi-persistent scheduling)

The base station may provide a specific terminal with SPS configuration dedicated to the terminal, and allocate one or more downlink SPS transmission resources that are repeated according to a configured period. DCI of terminal-dedicated (or terminal-specific) PDCCH may indicate activation (SPS activation) of a specific SPS configuration index. The terminal may perform downlink reception through the activated SPS transmission resource. Such SPS transmission resource may be used for initial HARQ transmission. The base station may allocate a retransmission resource of a specific SPS configuration index through DCI of PDCCH dedicated to a terminal. For example, when the terminal reports HARQ NACK for the SPS transmission resource, the base station may allocate the retransmission resource through DCI so that the terminal may receive downlink retransmission.

DCI of PDCCH dedicated to a terminal may indicate release or deactivation of a specific SPS configuration index. In this case, the corresponding terminal does not receive the SPS transmission resource for which release/deactivation is indicated.

CRC of DCI/PDCCH for activation/retransmission/deactivation for SPS configuration / resource may be scrambled by configured scheduling-radio network temporary identifier (CS-RNTI).

MBS (Multicast Broadcast Service)

In the NR-based wireless communication system, introduction of a new MBS-based DL broadcast or DL multicast transmission scheme, which is distinct from the aforementioned MBMS (e.g., MBSFN or SC-PTM), is being discussed. For example, the network side (e.g., base station/cell/TRP) may provide a point-to-multipoint (PTM) transmission scheme and a point-to-point (PTP) transmission scheme for DL broadcast or DL multicast transmission.

In the PTM transmission scheme for MBS, the base station may transmit a group common (or group-specific) PDCCH and a group common PDSCH to a plurality of terminals. A plurality of terminals may simultaneously receive the same group common PDCCH transmission and group common PDSCH transmission, and decode the same MBS data.

In the PTP transmission scheme for MBS, the base station may transmit a terminal-dedicated (or terminal-specific) PDCCH and a terminal-dedicated PDSCH to a specific terminal. The corresponding single terminal may receive the terminal-dedicated PDCCH and a terminal-dedicated PDSCH. When there are a plurality of terminals receiving the same MBS service, the base station may individually transmit the same MBS data to each of the plurality of terminals through different terminal-dedicated PDCCHs and terminal-dedicated PDSCHs.

In a PTM transmission method, a base station transmits a plurality of group common PDSCHs to terminals. A base station may configure a common frequency resource (CFR) for PTM transmission to a terminal. For example, a CFR may be referred to as a common and identical frequency resource allocated to a plurality of terminals or may be referred to as a frequency resource commonly used to provide a variety of MBS. In addition, a CFR may be also referred to as a BWP for MBS by being distinguished from the existing terminal-dedicated (or terminal-specific) BWP. A CFR may be associated with a terminal-dedicated BWP.

Group Common Transmission and Terminal-specific Transmission

Examples of the present disclosure include examples for clearly and efficiently performing cross-carrier scheduling, SPS, rate matching, etc. when terminal-specific transmission for the same downlink data (or TB) is performed after group common transmission for downlink data (e.g., a transport block (TB)) is performed.

In the present disclosure, group common transmission may correspond to multicast transmission or PTM transmission and terminal-specific transmission may correspond to unicast transmission or PTP transmission. A group common PDCCH/DCI may be CRC-scrambled by a G-RNTI, a G-CS-RNTI, etc. and a terminal-specific PDCCH/DCI may be CRC-scrambled by a C-RNTI, a CS-RNTI, etc.

In addition, some embodiments in the present disclosure may be applied when carrier aggregation (CA) or dual connectivity (DC) is configured for a terminal, but some other embodiments may be applied regardless of whether CA/DC is configured for a terminal (or, both when CA/DC is configured and when CA/DC is not configured). For example, examples related to rate matching for group common transmission and terminal-specific transmission may be applied regardless of whether CA/DC is configured.

When CA is configured, cross-carrier scheduling may be supported. For example, when a plurality of serving cells are configured, a base station may configure one serving cell as a scheduling cell or a scheduled cell. For example, DCI transmitted on a scheduling cell may include scheduling information for PDSCH transmission on a scheduling cell. Here, a terminal-specific search space (USS) may be configured in a scheduling cell and a USS may not be configured in a scheduling cell. Here, there is a problem in which it is not clear whether scheduling for multicast is possible in a scheduled cell for unicast.

Some or all of examples of the present disclosure may be applied to cross-carrier scheduling or intra-carrier scheduling through a cell that a terminal is scheduled or a cell that a terminal performs scheduling when CA/DC is configured. For example, when a PCell is a scheduling cell or a scheduled cell, self-carrier scheduling or cross-carrier scheduling within a PCell may be performed for a group common PDCCH/DCI and a group common PDSCH. In addition, for PTP retransmission, cross-carrier scheduling or intra-carrier scheduling may be performed through a scheduled cell or a scheduling cell.

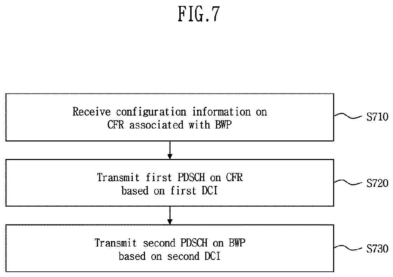

FIG. 7 is a diagram for describing an example of a downlink data reception method of a terminal according to the present disclosure.

In S710, a terminal may receive configuration information on a CFR from a network.

A CFR may be associated with a terminal-dedicated BWP. A CFR may correspond to a resource for group common transmission.

In S720, a terminal may receive a first PDSCH on a CFR based on first DCI.

A terminal's PDSCH reception may include assuming a process of a PDSCH transmitted by a base station through code block (CB) partitioning based on a transport block (TB), channel coding, rate matching, code block connection, scrambling, modulation, layer mapping, antenna port mapping, VRB mapping, VRB-PRB mapping, etc. (or in reverse order thereof), deriving a TB from a PDSCH and attempting to decode a TB. In other words, a terminal's PDSCH reception may include a rate matching process for deriving a TB (or deriving a CB by considering rate matching applied by a base station).

First DCI may correspond to group common DCI (or multicast DCI or DCI that is CRC-scrambled by a G-RNTI/a G-CS-RNTI, etc.). A first PDSCH may correspond to a group common PDSCH (or a multicast PDSCH, a PTM PDSCH, etc.).

Receiving a first PDSCH on a CFR may refer to performing processing for a first PDSCH including rate matching based on a CFR. For example, rate matching based on a CFR may include applying a rate matching pattern or a rate matching pattern group to a CFR (e.g., the number of resource blocks involved in a rate matching process, the number of resource elements, etc. are determined based on a resource region of a CFR).

In S730, a terminal may receive a second PDSCH on a BWP based on second DCI.

Second DCI may correspond to PTP DCI (or unicast DCI or DCI that is CRC-scrambled by a C-RNTI/a CS-RNTI, etc.). A second PDSCH may correspond to a PTP PDSCH (or a multicast PDSCH, a PTM PDSCH, etc.).

Receiving a second PDSCH on a BWP may refer to performing processing for a second PDSCH including rate matching based on a BWP. For example, rate matching based on a BWP may include applying a rate matching pattern or a rate matching pattern group to a BWP (e.g., the number of resource blocks involved in a rate matching process, the number of resource elements, etc. are determined based on a resource region of a BWP).

The above-described rate matching may correspond to limited buffer rate matching (LBRM).

In addition, for rate matching based on a CFR and rate matching for a BWP, a separate rate matching pattern group for a CFR may be configured, but without configuring a separate rate matching pattern group for a CFR, a BWP-level rate matching pattern group configured for a BWP may be applied to a CFR or may be applied to a BWP.

For example, first DCI and second DCI may include a rate matching indicator indicating a rate matching group applied to a first PDSCH and a second PDSCH, respectively.

Based on whether a TB received through a first PDSCH is successfully decoded, HARQ-ACK information for a first PDSCH may be transmitted to a network. When HARQ-ACK information indicates NACK (i.e., a failure in decoding of a TB), second DCI scheduling retransmission for the same TB may be received. Based on a HARQ process number indicated by second DCI being the same as a HARQ process number indicated by first DCI, a terminal may determine that second PDSCH transmission is retransmission of first PDSCH transmission.

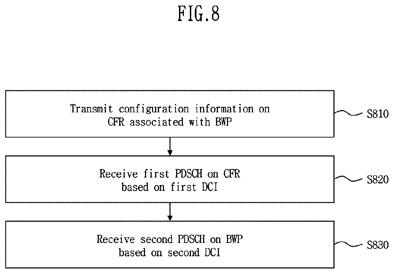

FIG. 8 is a diagram for describing an example of a downlink data transmission method of a base station according to the present disclosure.

In S810, a base station may transmit configuration information on a CFR associated with a BWP to a terminal.

In S820, a base station may transmit first PDSCH transmission based on first DCI to a terminal on a CFR.

In S830, a base station may transmit second PDSCH transmission based on second DCI to a terminal on a BWP.

In an example of FIG. 8, specific details of a PDSCH transmission process including first DCI and a first PDSCH, second DCI and a second PDSCH and rate matching are the same as a description referring to an example of FIG. 7, so an overlapping description is omitted.

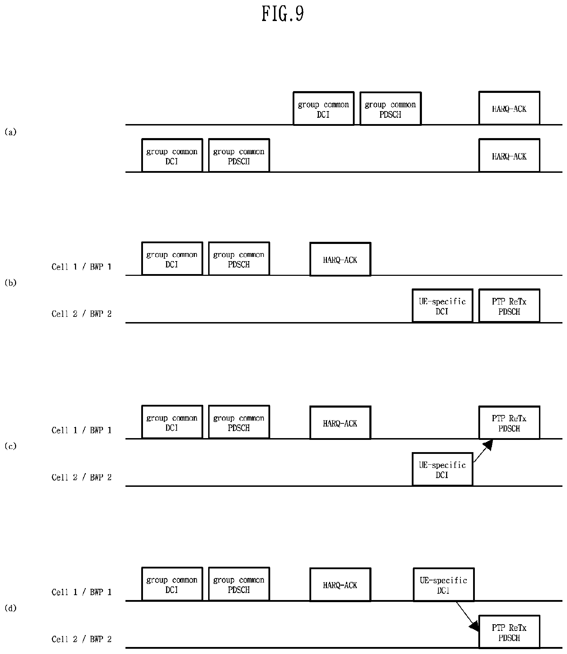

FIG. 9 is a diagram representing examples of downlink transmission to which the present disclosure may be applied.

As in an example of FIG. 9(a), a terminal may receive group common PDCCHs (DCI) and group common PDSCHs scheduled by a different G-RNTI through FDM or TDM. Here, multicast HARQ-ACK information for a group common PDCCH/PDSCH may be transmitted. Group common DCI may schedule a group common PDSCH in the same cell.

An example of FIG. 9(b) illustratively shows a self-scheduling PTP retransmission method of a base station for DC, CA or a plurality of BWP configurations.

An example of FIG. 9(c) shows an example of a cross-carrier scheduling PTP retransmission method of a base station for DC, CA or a plurality of BWP configurations.

An example of FIG. 9(d) shows another example of a cross-carrier scheduling PTP retransmission method of a base station for DC, CA or a plurality of BWP configurations.

Embodiment 1

This embodiment relates to a cross-carrier scheduling method for group common PDSCH transmission and PTP retransmission.

A cell scheduled or scheduling broadcast and/or multicast transmission for MBS may operate in the following manner.

Embodiment 1A

In a scheduled cell of CA, a CFR may not be configured and multicast PDCCH/PDSCH transmission may not be supported.

Here, when search space (SS)/control resource set (CORESET) for multicast may not be configured in a scheduled cell, it may include that a terminal ignores a SS/CORESET configuration for multicast of a scheduled cell, considers that there may be an invalid configuration or determines that a SS/CORESET configuration for a scheduled cell is not for multicast.

In this case, a CFR may be configured only in a scheduling cell of CA or multicast PDCCH/PDSCH transmission may be supported.

Embodiment 1B

In a scheduled cell of CA, a CFR may be configured and group common transmission may be supported.

Embodiment 1B-1

PDCCH-config (i.e., a set of higher layer parameters configured to a terminal for PDCCH reception) and PDSCH-config (i.e., a set of higher layer parameters configured to a terminal for PDSCH reception) used for multicast transmission may be configured in a CFR of a scheduled cell. Here, SS/CORESET for multicast may be configured in a scheduled cell.

In this embodiment, intra-carrier scheduling of unicast transmission is not supported in a scheduled cell of CA, but when there are a PDCCH-config configuration for multicast and a PDSCH-config configuration for multicast for a scheduled cell, a terminal may expect that intra-carrier scheduling is possible with the exception of group common transmission.

Embodiment 1B-2

PDSCH-config used for multicast transmission may be configured in a CFR of a scheduled cell, but PDSCH-config used for multicast transmission may not be configured.

Here, as in an example of FIG. 9(c), cross-carrier scheduling may be performed for a PDSCH of a scheduled cell of CA by group common DCI (e.g., DCI of a G-RNTI) transmitted from a scheduling cell of CA.

DCI of a G-RNTI may include a cell index. A base station may configure a cell index of group common DCI through an individual terminal-dedicated RRC message so that all terminals in a group can interpret it as the same cell.

When a CFR is configured for a scheduling cell in CA and there is no PDSCH-config in a CFR of a scheduling cell, only cross-carrier scheduling is possible. Accordingly, a terminal may expect only a case in which cross-carrier scheduling may be performed for a PDSCH of a scheduled cell by group common DCI transmitted from a scheduling cell. In this case, group common DCI of a G-RNTI does not need to include a cell index indicating a scheduled cell, and a terminal may determine that DCI of a G-RNTI transmitted from a specific scheduling cell performs cross-carrier scheduling only for a PDSCH of a specific scheduled cell according to a RRC message configuration of a base station.

When a CFR is configured for a scheduling cell in CA and there is PDSCH-config in a CFR of a scheduling cell, cross-carrier scheduling or intra-carrier scheduling may be indicated with a cell index of group common DCI. Accordingly, a terminal may receive a group common PDSCH from a scheduled cell or a scheduling cell according to a cell index of group common DCI.

Embodiment 1C

Even when there are a PDCCH-config configuration for multicast and a PDSCH-config configuration for multicast for a scheduled cell of CA, a terminal may not expect PTP retransmission in any cell from a base station.

Alternatively, even when there are a PDCCH-config configuration for multicast and a PDSCH-config configuration for multicast for a scheduled cell of CA, PTP retransmission may not be expected only in a scheduled cell of CA and PTP retransmission may be expected only in a scheduling cell of CA.

Method 1C-1

For a TB transmitted by a PTM PDSCH on a first cell (cell 1) and/or a first BWP (BWP 1) (hereinafter, Cell 1 / BWP 1), when NACK is received from a specific terminal, a base station may schedule a PTP retransmission PDSCH on Cell 2 / BWP 2 through DCI on a second cell (cell 2) and/or a second BWP (BWP 2) (hereinafter, Cell 2 / BWP 2). In this case, cell 1 may be a scheduled cell of CA and cell 2 may be a scheduling cell of CA.

Here, NACK may be transmitted on cell 1 according to a terminal-common PUCCH transmission method as in FIG. 7(b) or may be transmitted on cell 2 according to a terminal-dedicated PUCCH transmission method.

Method 1C-2

For a TB transmitted through a PTM PDSCH on Cell 1 / BWP 1, when NACK is received from a specific terminal, a base station may indicate PTM transmission on Cell 1 / BWP 1 through DCI on Cell 2 / BWP 2 and schedule a PTP retransmission PDSCH on Cell 2 / BWP 2. Here, Cell 1 / BWP 1 is a scheduled cell of CA and Cell 2 / BWP 2 is a scheduling cell of CA.

For example, DCI of Cell 2 / BWP 2 may include a cell index for Cell 1 / BWP 1 and an indicator indicating PTP retransmission. According to a configuration of a base station, a terminal may perform decoding by softly combining a TB received by PTM of Cell 1 / BWP 1 and a TB received from a PTP retransmission PDSCH of Cell 2 / BWP 2 through a soft buffer of the same HARQ process according to a cell index for Cell 1 / BWP 1 indicated by DCI of Cell 2 / BWP 2.

Here, NACK may be transmitted on Cell 1 / BWP 1 according to a terminal-common PUCCH transmission method as in FIG. 7(b) or may be transmitted on Cell 2 / BWP 2 according to a terminal-dedicated PUCCH transmission method.

Method 1C-3

When NACK is received from a specific terminal for a TB transmitted by a PTM PDSCH on Cell 1 / BWP 1, a base station may schedule a PTP retransmission PDSCH on Cell 1 / BWP 1 through DCI of Cell 2 / BWP 2. Here, Cell 1 / BWP 1 is a scheduled cell of CA and Cell 2 / BWP 2 is a scheduling cell of CA.

For example, as in an example of FIG. 7(C), DCI of Cell 2 / BWP 2 may include a cell index for Cell 1 / BWP 1 and an indicator indicating PTP retransmission. According to a configuration of a base station, a terminal may receive a PTP retransmission PDSCH on Cell 1 / BWP 1 according to a cell index for Cell 1 / BWP 1 indicated by DCI of Cell 2 / BWP 2. A terminal may perform decoding by softly combining a TB received by PTM of Cell 1 / BWP 1 and a TB received from a PTP retransmission PDSCH of Cell 1 / BWP 1 through a soft buffer of the same HARQ process.

Method 1C-4

A base station may semi-statically match PTM transmission on Cell 1 / BWP 1 and PTP retransmission on Cell 2 / BWP 2 through a RRC message or a MAC CE. In this case, DCI for PTP retransmission does not need to indicate a PTM transmission cell/BWP. When a HARQ process number (HPN) of DCI is the same through a RRC message or a MAC CE, a terminal may perform decoding with soft combining through a soft buffer of the same HARQ process by processing PTM transmission on Cell 1 / BWP 1 and PTP retransmission on Cell 2 / BWP 2 as transmitting the same TB.

Method 1C-5

A scheduled cell of CA may support both self-carrier scheduling and cross-carrier scheduling for PTP retransmission.

For PTP retransmission, a base station may transmit a PTP PDCCH in a scheduled cell of CA or a scheduling cell of CA and transmit a PTP PDSCH in a scheduled cell of CA. For example, a base station may be configured to support all embodiments 1C-3, 1C-1 or 1C-2. Here, DCI for PTP retransmission may be transmitted to a PCell or a SCell.

In the above-described examples, when Cell 2 / BWP 2 is a scheduled cell in CA, DCI of a C-RNTI scheduling PTP retransmission may be transmitted through common search space (CSS). Alternatively, when USS is configured in Cell 2 / BWP 2, PTP retransmission may be scheduled through USS.

In the above-described examples, when Cell 2 / BWP 2 is a scheduling cell in CA, DCI of a C-RNTI scheduling PTP retransmission may schedule PTP retransmission through CSS or USS.

Method 1D

When there are a PDCCH-config configuration for multicast and a PDSCH-config configuration for multicast for a scheduled cell of CA, a terminal may expect PTP retransmission for PTM initial transmission in a scheduled cell of CA.

Method 1D-1

PTP retransmission may be transmitted by self-carrier scheduling of a scheduled cell of CA.

For example, when NACK is received from a specific terminal for a TB transmitted by a PTM PDSCH on Cell 1 / BWP 1, a base station may schedule a PTP retransmission PDSCH on Cell 1 / BWP 1 through DCI on Cell 1 / BWP 1. Here, Cell 1 / BWP 1 is a scheduled cell in CA.

Here, for Cell 1 / BWP 1, a scheduled cell in CA, DCI of a C-RNTI scheduling PTP retransmission may be transmitted through CSS. Alternatively, when USS is configured in Cell 1 / BWP 1, PTP retransmission may be scheduled through USS.

Method 1D-2

PTP retransmission may be transmitted by cross-carrier scheduling of a scheduled cell of CA.

For example, as in FIG. 7(d), when NACK is received from a specific terminal for a TB transmitted by a PTM PDSCH on Cell 1 / BWP 1, a base station may schedule a PTP retransmission PDSCH on Cell 2 / BWP 2 through DCI on Cell 1 / BWP 1. Here, Cell 1 / BWP 1 may be a scheduled cell in CA and Cell 2 / BWP 2 may be a scheduled cell or a scheduling cell in CA.

In PTP retransmission, that PDCCH may be transmitted in a scheduled cell of CA and a PDSCH may be transmitted in a serving cell different from a cell that a PDCCH is transmitted. Here, for Cell 1 / BWP 1, a scheduled cell in CA, DCI of a C-RNTI scheduling PTP retransmission may be transmitted through CSS. Alternatively, when USS is configured in Cell 1 / BWP 1, PTP retransmission may be scheduled through USS.

A terminal may perform decoding by softly combining a TB received by PTM on Cell 1 / BWP 1 and a TB received from a PTP retransmission PDSCH on Cell 2 / BWP 2 through a soft buffer of the same HARQ process.

### Embodiment 1D-3

When NACK is received from a specific terminal for a TB transmitted by a PTM PDSCH on Cell 1 / BWP 1, a base station may schedule a PTP retransmission PDSCH on Cell 2 / BWP 2 through DCI on Cell 2 / BWP 2. Here, both Cell 1 / BWP 1 and Cell 2 / BWP 2 are a scheduled cell in CA.

Here, NACK may be transmitted on Cell 1 / BWP 1 by a terminal common PUCCH transmission method or may be transmitted on Cell 2 / BWP 2 by a terminal-specific PUCCH transmission method.

### Embodiment 1D-4

After NACK is received from a specific terminal for a TB transmitted by a PTM PDSCH on Cell 1 / BWP 1, a base station may indicate PTM transmission on Cell 1 / BWP 1 through DCI on Cell 2 / BWP 2 and schedule a PTP retransmission PDSCH on Cell 2 / BWP 2. Here, both Cell 1 / BWP 1 and Cell 2 / BWP 2 are a scheduled cell in CA.

For example, DCI on Cell 2 / BWP 2 includes a cell index for Cell 1 / BWP 1 and an indicator indicating PTP retransmission. According to a configuration of a base station, a terminal may perform decoding by softly combining a TB received by PTM of Cell 1 / BWP 1 and a TB received from a PTP retransmission PDSCH of Cell 2 / BWP 2 through a soft buffer of the same HARQ process according to a cell index for Cell 1 / BWP 1 indicated by DCI of Cell 2 / BWP 2.

Here, NACK may be transmitted on Cell 1 / BWP 1 by a terminal common PUCCH transmission method or may be transmitted on Cell 2 / BWP 2 by a terminal-specific PUCCH transmission method.

### Embodiment 1D-5

A base station may semi-statically match PTM transmission on Cell 1 / BWP 1 and PTP retransmission on Cell 2 / BWP 2 through a RRC message or a MAC CE. In this case, DCI for PTP retransmission does not need to indicate a PTM transmission cell/BWP. When a HPN of DCI is the same through aa RRC message or a MAC CE, a terminal may process PTM transmission on Cell 1 / BWP 1 and PTP retransmission on Cell 2 / BWP 2 as transmitting the same TB and perform decoding through soft combining through a soft buffer of the same HARQ process.

### Embodiment 1D-6

A scheduled cell in CA supports both self-carrier scheduling and cross-carrier scheduling for PTP retransmission.

In other words, for PTP retransmission, a base station may transmit a PTP PDCCH in a scheduled cell of CA or a scheduling cell of CA and transmit a PTP PDSCH in a scheduled cell. For example, a base station may be configured to support all embodiments 1D-2, 1D-1, 1D-3 and 1D-4. Here, DCI for PTP retransmission may be transmitted to a PCell or a SCell.

In the above-described examples, cell 1 may be replaced with BWP 1 and cell 2 may be replaced with BWP 2, and BWP 1 and BWP 2 may be configured to belong to the same cell or a different cell. Accordingly, the above-described cell index may be replaced with BWP identification information or may be replaced with a cell identifier and BWP identification information. In this case, a base station and a terminal may support intra-cell or inter-cell cross-BWP PTP retransmission.

### Embodiment2

This embodiment relates to a G-CS-RNTI application and operation method for group common SPS transmission. This embodiment may be applied even when CA/DC is configured for a terminal and may be also applied even when CA/DC is not configured for a terminal.

### Embodiment 2A

When a plurality of group common SPS configurations are configured for a terminal or when a group common SPS configuration and a terminal-dedicated SPS configuration are configured together for a terminal, a terminal that receives terminal-specific DCI for PTP retransmission of SPS may divide a different SPS configuration based on a HARQ process identifier (or HPN) included in DCI.

For example, it may be assumed that DCI which is CRC-scrambled by a terminal-specific RNTI (e.g., a CS-RNTI) is received and a HPN value of received DCI corresponds to a specific SPS configuration index or a group common SPS configuration. In this case, a terminal may determine that a PDSCH scheduled by terminal-specific DCI retransmits a TB of a SPS PDSCH corresponding to a specific SPS configuration index or a group common SPS configuration.

When a SPS configuration index or a group common SPS configuration is distinguished based on a HPN (or a HARQ process identifier), a base station may configure the number of different HARQ processes (e.g., higher layer parameter nrofHARQ-Processes) and a HARQ process identifier offset (e.g., higher layer parameter harq-ProcID-Offset) for different SPS configurations or a terminal-dedicated SPS and group common SPS configuration. In other words, nrofHARQ-Processes and harq-ProcID-Offset may be configured per SPS configuration index and a HARQ Process ID for specific SPS transmission may be determined as follows.

HARQ Process ID = [floor (CURRENT_slot X 10 / (numberOfSlotsPerFrame X periodicity))] modulo nrofHARQ-Processes + harq- ProcID-Offset

Embodiment 2B

When a plurality of group common SPS configurations are configured for a terminal or when a group common SPS configuration and a terminal-dedicated SPS configuration are configured together for a terminal, a group common CS-RNTI and a unicast CS-RNTI may be divided and configured.
In this case, the same HARQ process ID may be allocated differently to group common SPS and unicast SPS or may be allocated or shared in an overlapping manner.

Embodiment 2C

The same CS-RNTI may be configured for a group common SPS configuration and a terminal-dedicated SPS configuration and whether it is PTP retransmission or new unicast transmission may be distinguished based on a new indicator (or a new data indicator (NDI)) included in DCI of a CS-RNTI.
Here, a new indicator included in DCI may be defined as having a size of 1 bit or may be defined as having a size of at least 1 bit that may indicate a group common SPS configuration index.

Embodiment 2D

The same CS-RNTI may be configured for a group common SPS configuration and a terminal-dedicated SPS configuration and group common and terminal-specific (unicast) SPS may be distinguished based on a HARQ process ID included by DCI of a CS-RNTI.
In this case, group common SPS and unicast SPS should divide and use HARQ processes. In other words, the same HARQ process ID may be configured not to be overlapped/shared for group common SPS transmission and unicast SPS transmission.
An example of a SPS reception operation of a terminal is as follows.
After specific group common SPS is activated by DCI which is CRC-scrambled by a specific G-CS-RNTI, a terminal may store and decode a TB received through a group common SPS PDSCH in a HARQ process corresponding to a specific HPN value. A specific HPN value is the same as a HARQ Process ID corresponding to a group common SPS PDSCH resource. Afterwards, a terminal may receive DCI which is CRC-scrambled by a terminal-specific CS-RNTI or C-RNTI from a base station or receive DCI which is CRC-scrambled by the specific G-CS-RNTI.
If received DCI indicates a retransmission resource and the specific HPN value, a terminal recognizes that the retransmission resource is a retransmission resource for a HARQ process corresponding to an indicated HPN value. Accordingly, a TB received by a corresponding retransmission resource may be decoded again by storing a HARQ process corresponding to an indicated HPN value.
Here, DCI for a terminal-specific CS-RNTI or C-RNTI is used to allocate a PTP retransmission resource for group common SPS and DCI for a specific G-CS-RNTI is used to allocate a PTM retransmission resource for group common SPS. In this method, a specific G-CS-RNTI and a terminal-specific CS-RNTI may be related as follows. This relationship may be preconfigured through signaling between a base station and a terminal or may be predefined without signaling between a base station and a terminal.
Option 1: According to a configuration of a base station, a specific G-CS-RNTI may be mapped to a specific terminal-specific CS-RNTI.
Option 2: A terminal-specific CS-RNTI of a terminal may be mapped to all G-CS-RNTIs for group common SPSs.
Option 3: When there is a SPS configuration index indicated by specific terminal-specific CS-RNTI DCI, a G-CS-RNTI connected to a SPS configuration index may be mapped with a specific terminal-specific CS-RNTI.
For example, when DCI which is CRC-scrambled by a C-RNTI indicates a specific HPN used by group common SPS of a G-CS-RNTI of previous transmission, a terminal may determine that corresponding C-RNTI-based DCI schedules a unicast PDSCH and a TB received from a unicast PDSCH may replace a TB stored in a HARQ process corresponding to the specific HPN (i.e., processed as new TB transmission).

Alternatively, when DCI which is CRC-scrambled by a C-RNTI indicates a specific HPN used by group common SPS of a G-CS-RNTI of previous transmission, a terminal may determine that corresponding C-RNTI-based DCI schedules TB retransmission of a previous group common SPS PDSCH and decode a corresponding TB again by accumulating a TB received from a retransmission PDSCH in a TB stored in a HARQ process for the specific HPN (e.g., soft combining).

Embodiment 3

This embodiment relates to an activation command method of a terminal-specific PDCCH for activation of group common SPS. This embodiment may be applied even when CA/DC is configured for a terminal and may be also applied even when CA/DC is not configured for a terminal.

Embodiment 3A

Unicast SPS and group common SPS may use the same CS-RNTI and DCI for SPS activation may indicate whether it is group common SPS through 1-bit information.

A HPN indicated by activation DCI may be unrelated to a SPS HARQ Process ID to be actually used. In this case, the same SPS configuration index may be used by being configured for both group common SPS and unicast SPS. In other words, a terminal may simultaneously activate group common SPS and unicast SPS having the same SPS configuration index.

Activation DCI may give an indication to simultaneously activate group common SPS and unicast SPS having the same SPS configuration index or may give an indication to activate only one of group common SPS or unicast SPS through 1-bit information in DCI.

Embodiment 3B

Unicast SPS and group common SPS may use the same CS-RNTI and DCI for SPS activation may not include the 1-bit information.

In this case, a HPN value of activation DCI may be indicated to distinguish between unicast SPS and group common SPS. For example, unicast SPS and group common SPS may be mapped to a different HPN. In this case, the same SPS configuration index may not be simultaneously mapped to group common SPS and unicast SPS and may be mapped only to group common SPS or unicast SPS. A terminal may simultaneously activate group common SPS and unicast SPS having the same SPS configuration index.

Embodiment 3C

Unicast SPS and group common SPS may use a different CS-RNTI and DCI for SPS activation may not include the 1-bit information.

In this case, a CS-RNTI value of activation DCI may be indicated to distinguish between unicast SPS and group common SPS.

Embodiment 4

This embodiment relates to a rate matching (RM) method for group common PDCCH/PDSCH transmission. This embodiment may be applied even when CA/DC is configured for a terminal and may be also applied even when CA/DC is not configured for a terminal.

When a Common Frequency Resource (CFR) for transmitting or receiving a group common PDCCH/PDSCH is configured, a base station may provide RM configuration information for a CFR as follows. A terminal may apply conventional RM configuration information and RM configuration information for a CFR as follows.

Embodiment 4A

RM configuration information for a CFR may be provided based on a parameter for a rate match pattern group included in PDSCH-config configuration information for unicast.

Embodiment 4A-1

A base station may configure a 'CFR level rate match pattern' in rate match pattern group 1 or rate match pattern group 2 of PDSCH-config for unicast. In addition to a cell level (cellLevel) and a BWP level (bwpLevel) being configured for a rate match pattern group of a specific ID, a CFR level may be configured. For example, a RM configuration for a CFR may be provided based on a rate match pattern group of PDSCH-config for unicast as follows.

【Table 6】

```
RateMatchPatternGroup ::= SEQUENCE (SIZE
(1..maxNrofRateMatchPatternsPerGroup)) OF CHOICE {
cellLevel          RateMatchPatternId,
bwpLevel          RateMatchPatternId
CFRLevel          RateMatchPatternId
}
```

<u>Embodiment 4A-2</u> A configuration at a cell level or at a BWP level for a rate match pattern group of a specific ID may be maintained. In other words, a rate match pattern group of a specific ID may not be configured as a CFR level. A terminal may apply RateMatchPatternGroup1 or RateMatchPatternGroup2 according to an indication of group common DCI. In this case, a RM configuration which will be applied to a CFR may be provided as follows.

Configuration Option 1: PDSCH-config for unicast for a BWP associated with a CFR (e.g., a terminal active BWP that a CFR is configured) may configure a CFR level rate match pattern.

For example, PDSCH-config for a BWP (e.g., a BWP associated with a CFR or an active BWP) may include information on RateMatchPatternGroup1 and RateMatchPatternGroup2 and one of two groups may be applied to a group common PDSCH.

Configuration Option 2: PDSCH-config for a CFR may configure a CFR level rate match pattern.

For example, PDSCH-config for a CFR may be provided for a terminal and a RateMatchPatternGroup configuration included in corresponding PDSCH-config may be applied to a group common PDSCH. For example, RateMatchPatternGroup that PDSCH-config for a CFR and PDSCH-config for a BWP are distinguished may be included. For example, BWP PDSCH-config (or PDSCH-config for an UE active BWP) may include RateMatchPatternGroup1 and CFR PDSCH-config may include RateMatchPatternGroup2.

In this case, a terminal may apply RateMatchPatternGroup1 or RateMatchPatternGroup2 as follows. Here, one group may be configured for a CFR and the other group may not be configured for a CFR.

Operation Option 1: Group common DCI may always indicate a rate match pattern group for a CFR. If group common DCI (e.g., G-RNTI-based DCI) indicates a rate match pattern group that is not for a CFR, a terminal may ignore only a corresponding indication of DCI or the entire DCI. If terminal-dedicated DCI (e.g., C-RNTI-based DCI) indicates a rate match pattern group for a CFR, a terminal may ignore only a corresponding indication of DCI or the entire DCI.

Operation Option 2: DCI may not indicate a rate match pattern group. A terminal may apply/use a rate match pattern group according to a RNTI that scrambles CRC of DCI. For G-RNTI-based DCI, a rate match pattern group for a CFR may be used and for C-RNTI-based DCI, a BWP level or cell level rate match pattern group may be used.

<u>Embodiment 4B</u>

In addition to RateMatchPatternGroup1 and RateMatchPatternGroup2, RateMatchPatternGroup for a CFR (e.g., rateMatchPatternGroupCFR) may be configured.

Configuration Option 1: PDSCH-config for unicast of a BWP associated with a CFR (or a terminal active BWP) may additionally include a parameter for a CFR level rate match pattern group. For example, PDSCH-config for a BWP may include configuration information for RateMatchPatternGroup1, RateMatchPatternGroup2 and RateMatchPatternGroupCFR.

Configuration Option 2: PDSCH-config of a CFR may include a parameter for a CFR level rate match pattern group. For example, PDSCH-cofing for a BWP may include RateMatchPatternGroup1 and RateMatchPatternGroup2 and PDSCH-config for a CFR may include configuration information for RateMatchPatternGroupCFR.

An operation that a base station indicates RateMatchPatternGroupCFR through DCI may be defined as follows. The existing DCI may indicate two rate match pattern groups through up to 2-bit fields. The following new operation may be defined to indicate three pattern groups.

Operation Option 1: A base station may always configure only two rate match pattern groups of three groups (i.e., RateMatchPatternGroup1, RateMatchPatternGroup2 and RateMatchPatternGroupCFR) with a RRC message. DCI may indicate any one group of two groups configured by RRC. For example, DCI may indicate one of RateMatchPatternGroup1 or RateMatchPatternGroupCFR or indicate one of RateMatchPatternGroup2 or RateMatch-PatternGroupCFR. Alternatively, as before, DCI may indicate either RateMatchPatternGroup1 or RateMatchPatternGroup2.

Operation Option 2: A base station may configure up to three rate match pattern groups with a RRC message.

Operation Option 2-1: It may be defined to indicate RateMatchPatternGroupCFR added to a terminal by adding a 1-bit field to DCI.

Operation Option 2-2: DCI still indicates only up to 2-bit fields, but its interpretation may be different from before. For example, for group common DCI or DCI which is CRC-scrambled by a G-RNTI, a terminal may interpret a 2-bit field of the existing DCI as always indicating a rate match pattern group for a CFR.

Each configured group such as rateMatchPatternGroup1, rateMatchPatternGroup2 or rateMatchPattern-GroupCFR may include a list of indexes of at least one rate match pattern. When a value of a bit in a Rate Matching Indicator field of DCI format 1_1 scheduling a PDSCH is 1, the entire set of resource-sets not available for a PDSCH (i.e., a resource set corresponding to rate match pattern(s) belonging to a rate match pattern group) may be dynamically indicated. Here, resource elements (REs) corresponding to the entire set of resource-sets configured by rate match pattern(s) not included in any of the three groups may not be available for a PDSCH and a SPS PDSCH scheduled by DCI format 1_0 and 1_1. When receiving a PDSCH that group common SPS is activated by DCI format 1_0 or a PDSCH scheduled by DCI format 1_0, REs configured as resources belonging to rateMatchPatternGroup1, rateMatchPatternGroup2 or rateMatchPatternGroupCFR are not available for a corresponding scheduled PDSCH.

Embodiment 4C

This embodiment relates to a limited buffer rate matching (LBRM) configuration method.

When a CFR is configured, LBRM for PTM transmission may be determined/applied based on a CFR. In other words, REs associated with rate matching may be determined based on all RBs belonging to a CFR.

When PTP retransmission of a TB transmitted by PTM is generated, it is necessary to determine whether LBRM for PTP retransmission will be based on a BWP or will be based on a CFR for a clear operation of a terminal.

Embodiment 4C-1

A terminal may determine/apply LBRM for PTP retransmission based on a CFR (like PTM).

For example, when a CFR is configured for a terminal, unlike PTM (or multicast, group common) transmission received through a CFR, even for PTP (or unicast, terminal-specific) transmission received on a BWP, not a CFR, REs associated with rate matching may be determined based on all RBs belonging to a CFR.

Embodiment 4C-2

A terminal may determine/apply LBRM for PTP retransmission based on a BWP. For example, a BWP may be a BWP configured for a terminal or an active BWP.

For example, when a CFR is not configured for a terminal, PTM (or multicast, group common) transmission is received by a terminal active BWP, and when PTP (or unicast, terminal-specific) transmission, retransmission therefor, is received on a terminal active BWP, REs associated with rate matching may be determined based on all RBs belonging to a BWP.

For example, a CFR is configured for a terminal, and unlike PTM (or multicast, group common) transmission received through a CFR, for PTP (or unicast, terminal-specific) transmission received on a BWP, not a CFR, REs associated with rate matching may be determined based on all RBs belonging to a BWP.

Embodiment 5

This embodiment relates to a method for configuring xOverhead when transmitting a group common PDCCH/PDSCH. Here, xOverhead corresponds to a parameter showing an overhead from a CSI-RS, a CORESET, etc. This embodiment may be applied even when CA/DC is configured for a terminal and may be also applied even when CA/DC is not configured for a terminal.

When a CFR for transmitting or receiving a group common PDCCH/PDSCH is configured, a base station may configure an xOverhead configuration parameter as follows. A terminal receiving a group common PDSCH determines a TBS of a group common PDSCH according to Embodiment 5B when separate xOverhead is configured per CFR and determines a TBS of a group common PDSCH according to Embodiment 5A when separate xOverhead is not configured per CFR.

Embodiment 5A

An xOverhead parameter may be configured per PDSCH-ServingCellConfig.

A terminal receiving a group common PDSCH may determine a TBS for a group common PDSCH by applying xOverhead corresponding to a cell to which a DL BWP with which a CFR is associated belongs. A base station may configure all terminals receiving a group common PDSCH to have the same xOverhead through the same CFR.

Embodiment 5B

A base station may configure a separate xOverhead parameter per CFR.

A terminal receiving a group common PDSCH may determine a TBS for a group common PDSCH by applying xOverhead corresponding to a CFR of a group common PDSCH. If separate xOverhead is not configured per CFR, a terminal may determine a TBS of a group common PDSCH according to Embodiment 5A.

Embodiment 6

This embodiment relates to a PDSCH-config configuration method for a CFR. This embodiment may be applied even when CA/DC is configured for a terminal and may be also applied even when CA/DC is not configured for a terminal.

A base station may configure PDSCH-config for a CFR separately from PDSCH-config for a BWP. A CFR may be associated with a UE active BWP. Accordingly, some parameters may be configured commonly for a CFR and a BWP. Accordingly, a base station may configure some parameters only for one PDSCH-config without repeating them for PDSCH-config for a CFR and PDSCH-config for a BWP.

For example, when a configuration value for parameter A is the same in PDSCH-config for a CFR and PDSCH-config for a BWP, a base station may include parameter A only in PDSCH-config for a BWP. If there is no parameter A in PDSCH-config for a CFR, a terminal may determine a value of parameter A as follows.

Embodiment 6A

A terminal may operate by assuming that a parameter A configuration of PDSCH-config for an UE active BWP associated with a CFR is also present in PDSCH-config of a CFR.

Embodiment 6B

When PDSCH-config for a CFR is indicated to quote specific parameter A (i.e., apply corresponding parameter A from another PDSCH-config), it may operate by assuming that a configuration value of corresponding parameter A included in PDSCH-config for an UE active BWP associated with a CFR is also present in PDSCH-config for a CFR. When there is no citation indication, a terminal may operate by determining that a configuration for specific parameter A is not present in PDSCH-config for a CFR.

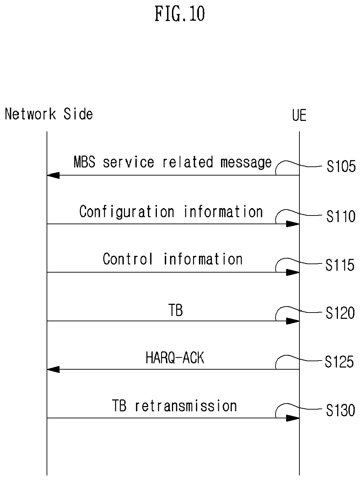

FIG. 10 is a diagram for illustrating a signaling procedure of the network side and the terminal according to an embodiment of the present disclosure.

FIG. 10 shows an example of signaling between a network side and a terminal (UE) in a situation to which the examples (e.g., embodiments 1, 2, 3, 4, 5, 6 or its detailed examples, and a combination of one or more thereof) of the present disclosure described above may be applied.

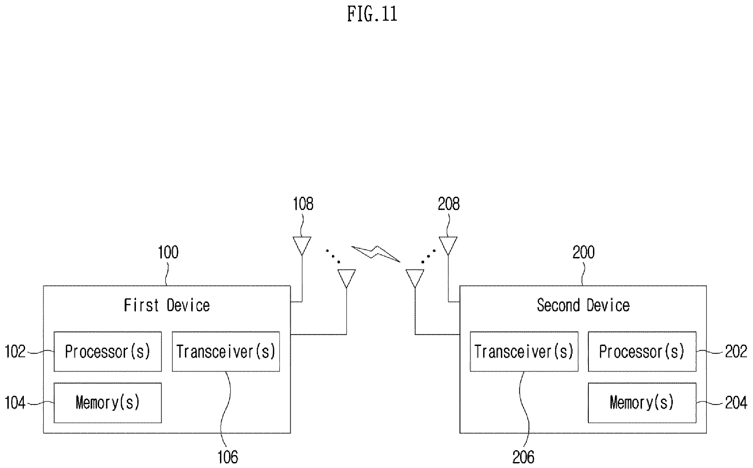

Here, the UE/network side is exemplary, and may be replaced with various devices to be described with reference to FIG. 11. FIG. 10 is for convenience of description, and does not limit the scope of the present disclosure. Also, some step(s) shown in FIG. 10 may be omitted depending on circumstances and/or settings. In addition, in the operation of the network side/UE of FIG. 10, the above-described uplink transmission/reception operation and the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The UE may enter the RRC_CONNECTED mode, and may report a message indicating one or more interested MBS services to the network side (S105).

Here, the UE may transmit the message to the network side through at least one of UCI, MAC CE (Control Element), or RRC message. In addition, the MBS service of interest in the message may mean one of TMGI and G-RNTI listed in a DL message received from the network side.

For example, the DL message may be a service availability message listing TMGI #1, TMGI #3, TMGI #5, and TMGI #10. When the UE is interested in TMGI #5, the UE may indicate the order of TMGI #5 in the message. That is, the terminal may report '3' to the network side.

As an additional example, the DL message may be a service availability message listing G-RNTI #1, G-RNTI #3, G-RNTI #5, and G-RNTI #10. When the UE is interested in G-RNTI #10, the UE may indicate the order of G-RNTI #10 in the message. That is, the UE may report '4' to the network side.

For example, the operation of the UE (100 or 200 in FIG. 11) of the above-described step S105 transmitting the message to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the message, and the one or more transceivers 106 may transmit the message to the network side.

Upon receiving the message, the network side may transmit configuration information to the UE by an RRC message (S110).

For example, the configuration information may include CFR (common frequency resource) configuration information, one or more group common PDSCH configuration information including TCI states for one or more G-RNTI values, search space configuration information including TCI states for one or more G-RNTI values.

Here, the RRC message may be a group common message transmitted through a PTM MCCH (Multicast Control Channel) or a UE-dedicated message transmitted through a UE-specific DCCH (Dedicated Control Channel).

In addition, CFR may include DL CFR and UL CFR. For example, one DL CFR may provide group common PDCCH and group common PDSCH transmission resources for MBS transmission or reception. One UL CFR may provide HARQ-ACK PUCCH resources for group common PDSCH reception. One CFR may be one MBS-specific BWP or one UE-specific BWP. Additionally or alternatively, one or a plurality of CFRs may be configured in one UE-specific BWP. One CFR may have a linkage relationship with one UE-specific BWP.

The terminal may be configured with at least a G-RNTI value for each MBS CFR or each serving cell. GC-CS-RNTI may be configured/used for activation, retransmission or release of one or more group common SPS configurations.

When the UE is not configured with GC-CS-RNTI for CFR or serving cell, and CS-RNTI is configured for CFR or serving cell, the UE may use CS-RNTI for activating, retransmitting, or releasing of one or more group common SPS configurations.

The network side may associate one GC-CS-RNTI value with a TMGI list or a G-RNTI list. In this case, the network side may provide a TMGI list or a G-RNTI list associated with the GC-CS-RNTI value.

In addition, configuration information of each PDSCH (e.g., 'PDSCH-config') may be configured as shown in Table 7 as a minimum information element for multicast and/or broadcast.

[Table 7]

```
PDSCH-Config ::= SEQUENCE {
dataScramblingIdentityPDSCH INTEGER (0..1023) OPTIONAL, -- Need S
dmrs-DownlinkForPDSCH-MappingTypeA SetupRelease { DMRS-DownlinkConfig }
OPTIONAL, -- Need M
dmrs-DownlinkForPDSCH-MappingTypeB SetupRelease { DMRS-DownlinkConfig }
```

```
OPTIONAL, -- Need M
tci-StatesToAddModList SEQUENCE (SIZE(1..maxNrofTCI-States)) OF TCI-State
OPTIONAL, -- Need N
tci-StatesToReleaseList SEQUENCE (SIZE(1..maxNrofTCI-States)) OF TCI-StateId
OPTIONAL, -- Need N
vrb-ToPRB-Interleaver ENUMERATED {n2, n4} OPTIONAL, -- Need S
resourceAllocation ENUMERATED { resourceAllocationType0,
resourceAllocationType1, dynamicSwitch},
pdsch-TimeDomainAllocationList SetupRelease { PDSCH-
TimeDomainResourceAllocationList } OPTIONAL, -- Need M
pdsch-AggregationFactor ENUMERATED { n2, n4, n8 } OPTIONAL, -- Need S
rateMatchPatternToAdd Mod List SEQUENCE (SIZE (1..maxNrofRateMatchPatterns))
OF RateMatchPattern OPTIONAL, -- Need N
rateMatchPatternToReleaseList SEQUENCE (SIZE (1..maxnrofRateMatchPatterns))
OF RateMatchPatternId OPTIONAL, -- Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 11) of the above-described step S110 receiving configuration information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the configuration information, and the one or more transceivers 106 may receive the configuration information from the network side.

The UE may receive control information from the network side (S115). For example, the UE may receive downlink control information (DCI) for scheduling/activating/releasing uplink/downlink transmission from the network side.

Specifically, when the search space is configured for the configured CFR, the UE may monitor the PDCCH in the SS (search space) configured in the configured CFR, to receive DCI CRC scrambled with G-RNTI or G (group)-CS (configured scheduling)-RNTI.

For example, the operation of the UE (100 or 200 in FIG. 11) of the above-described step S115 receiving control information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the control information, and the one or more transceivers 106 may receive the control information from the network side.

The UE may receive the TB from the network side (S120).

Specifically, when the data unit is available on the MTCH of the MBS radio bearer (MRB) for the MBS service, the network side may construct and transmit a TB including the data unit for an SPS PDSCH occasion associated with the MTCH of the MRB for the MBS service, or associated with TMGI of the MBS service, or associated with a short ID of the MBS service, or associated with G-RNTI mapped to the MBS service, according to the service-to-resource mapping.

For group common dynamic scheduling of the TB, the network side may transmit DCI through PDCCH to the UE. The corresponding DCI may be CRC scrambled by G-RNTI, G-CS-RNTI, or CS-RNTI. The PDCCH may be implemented as a group common PDCCH or a UE-specific PDCCH.

For example, the DCI may include at least one of an identifier for the DCI format, a carrier indicator, a bandwidth part indicator, frequency domain resource assignment, time domain resource assignment, VRB-to-PRB mapping, PRB bundling size indicator, rate matching indicator, ZP CSI-RS trigger, MCS, NDI, RV, HARQ process number, downlink assignment index, TPC command for scheduled PUCCH, PUCCH resource indicator, PDSCH-to-HARQ_feedback timing indicator, an antenna port, a transmission configuration indication, an SRS request, a DMRS sequence initialization, or a priority indicator.

For group common dynamic scheduling, by group common or UE-specific RRC message or by group common or UE-specific MAC CE, the network side may provide with UE one or more of the service-resource mappings for the MBS service identified by TMGI or G-RNTI or GC-CS-RNTI. Data of the MBS service may be carried through MBS radio bearer (MRB) of a multicast traffic logical channel, that is, MTCH associated to the MBS service. RRC message may be a group common message transmitted through PTM MCCH (Multicast Control Channel) or UE-dedicated message transmitted through UE-specific DCCH (Dedicated Control Channel). The DCI scheduling PDSCH carrying the MBS service data may additionally indicate at least one of short ID, MTCH ID, MRB ID, G-RNTI value, and a TMGI value for the MBS service.

When receiving DCI CRC scrambled by G-RNTI that the UE is interested to receive, the UE may determine MBS service(s) associated with one or more of short ID, MTCH ID, MRB ID, G-RNTI value, and a TMGI value for each PDSCH occasion, based on mapping between MBS service and HPN indicated in the DCI, and/or mapping between MBS service and short ID(s) indicated in the DCI.

Then, when UE is interested in the determined MBS service(s), the UE may receive PDSCH transmission scheduled by the DCI. When the UE is not interested in the determined MBS service(s), UE may not receive PDSCH transmission scheduled by the DCI.

For example, the operation of the UE (100 or 200 in FIG. 11) of the above-described step S120 receiving the TB from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the TB, and the one or more transceivers 106 may receive the TB from the network side.

Upon receiving group common DCI indicating PUCCH resource(s) for MBS HARQ-ACK, the UE may transmit HARQ-ACK through PUCCH after a PDSCH reception scheduled by the DCI (S125). That is, according to decoding status of PDSCH transmission, the UE may transmit HARQ feedback to the network side.

In the case of PTM scheme 1, group common DCI may indicate a single PUCCH resource indicator and a single PDSCH-to-HARQ_feedback timing indicator at least for ACK/NACK based HARQ-ACK.

Specifically, in the case of UE-specific PUCCH resource allocation for ACK/NACK based HARQ-ACK for group common DCI, different UEs in the corresponding group (unless 'PUCCH-config' for multicast is configured) may be configured with different values of at least 'PUCCH-Resource' and 'dl-DataToUL-ACK' in UE-dedicated 'PUCCH-config' for multicast or for unicast. Different UEs may be allocated with different PUCCH resources, by the same PUCCH resource indicator and the same 'PDSCH-to-HARQ_feedback timing indicator of the group common DCI.

In the case of PTP retransmission, the PUCCH resource indicator and the PDSCH-to-HARQ_feedback timing indicator in the UE-specific DCI may be interpreted based on 'PUCCH-config' for unicast, regardless of whether 'PUCCH-config' for multicast is configured or not.

Here, PRI (PUCCH Resource Indicator) may be indicated by group common DCI as follows.

As an example, UE-specific PRI list may be included in the DCI (option 1A-1). Each PRI in the corresponding list may indicate an entry corresponding to a candidate 'pucch-ResourceId' value of 'PUCCH-config' for allocation of the same PUCCH resource or different PUCCH resources for different UEs in the group receiving the same DCI. Different PRI of DCI may indicate different entry in 'PUCCH-config.'

Here, a candidate 'pucch-ResourceId; value may be configured by RRC, and a different 'pucch-ResourceId' value may be configured for a different UE in the same group at least in multicast PUCCH-config.

As an additional example, a group common PRI may be included in the DCI (option 1-A-2). A single group common PRI may indicate a specific entry for a candidate 'pucch-ResourceId' value in UE-specific 'PUCCH-config' for allocation of the same or different PUCCH resources for all UEs in the group.

In addition, a candidate 'pucch-ResourceId' value may be configured by RRC. Different 'pucch-ResourceId' value may be configured for different UE in the same group at least in 'PUCCH-config' for multicast.

When 'PUCCH-config' for multicast is configured for HARQ-ACK for group common PDSCH scheduled by the group common DCI, the UE may assume that the PRI of the group common DCI indicates an entry corresponding to a candidate 'pucch-ResourceId' value in 'PUCCH-config' for multicast.

When 'PUCCH-config' for multicast is not configured for HARQ-ACK for group common PDSCH scheduled by the group common DCI, the UE may assume that the PRI of the group common DCI indicates an entry corresponding to a candidate 'pucch-ResourceId' value in 'PUCCH-config' for unicast.

K1 (PDSCH-to-HARQ_feedback timing indicator) may be indicated by group common DCI as follows.

As an example, UE-specific K1 value list may be included in the DCI (option 1B-1). Each K1 in the list may indicate the same UL slot or different UL (sub-)slot for different UE in the group.

For example, Different K1 values may be allocated to different UEs. That is, K1 may be allocated to UE1, K2 may be allocated to UE2, K3 may be allocated to UE3.

As an additional example, multiple UEs may share K1 value. For example, UE1 and UE2 may share K1 value, UE3 and UE4 may share K2 value.

As an additional example, one K1 value may be a reference, and other K1 value may be allocated based on the reference. {K1_ref, K1_offset list} may be indicated by DCI.

For example, UE1 may use K1_ref, UE2 may use K1_ref + K1_offset1, UE3 may use K1_ref + K1_offset2.

As an additional example, group common K1 value may be included in the DCI (option 1B-2). For example, a single K1 value may indicate an entry corresponding to a candidate 'dl-DataToUL-ACK' values in UE-specific 'PUCCH-config' for allocation of the same or different PUCCH resources for all UEs in the group receiving the DCI. This may be applied for the case that a DCI format is configured in UE-specific 'PUCCH-config' for the K1 value.

As an additional example, a candidate 'dl-DataToUL-ACK' value may be configured by RRC, and may be differently configured for different UE in the same group at least in 'PUCCH-config' for multicast.

As an additional example, when 'PUCCH-config' for multicast is configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for multicast.

As an additional example, when 'PUCCH-config' for multicast is not configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for unicast.

In addition, when the UE receives group common DCI CRC scrambled by G-RNTI and/or UE-specific DCI CRC scrambled by C-RNTI, and when Type-1 HARQ-ACK codebook is configured for 'PUCCH-config' for multicast and/or 'PUCCH-config' for unicast, UE may construct TDRA (Time Domain Resource Allocation) to generate Type-1 HARQ-ACK codebook for HARQ-ACK(s) for group common PDSCH scheduled by group common DCI and/or UE-specific PDSCH scheduled by UE-specific DCI.

When TB decoding in a PDSCH transmission occasion is not successful, UE may transmit HARQ NACK to the network side through a PUCCH resource in the configured UL CFR.

Using PUCCH resource, the UE may transmit HARQ-ACK for other PDSCH transmissions such as unicast SPS PDSCH, dynamic unicast PDSCH, PTP retransmission and/or dynamic group common PDSCH.

Here, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, UE may construct a codebook based on one or more of the above options.

When RSRP threshold is configured, the UE may use NACK only based HARQ-ACK based on the measured RSRP of a serving cell. When the measured RSRP is higher than a threshold, NACK only based HARQ-ACK may be transmitted through group common PUCCH resource indicated by PRI of DCI. When the measured RSRP is lower than the threshold, NACK only based HARQ-ACK may be transformed into ACK/NACK based HARQ-ACK on UE-specific PUCCH resource indicated by PRI of DCI.

Meanwhile, when the 'pdsch-AggregationFactor' is configured for a G-RNTI or when 'repetition_number' is indicated by the network side by DCI, the TB scheduled by group common DCI may be repeated for Nth HARQ transmission of the TB within each symbol allocation among each of the 'pdsch-AggregationFactor' consecutive slots or among each of the 'repetition_number' consecutive slots, if configured.

For example, the operation of the UE (100 or 200 in FIG. 11) of the above-described step S125 transmitting the HARQ-ACK to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the HARQ-ACK, and the one or more transceivers 106 may transmit the HARQ-ACK to the network side.

Receiving HARQ NACK of a TCI state, the network side may retransmit, using the TCI state, PDCCH and PDSCH in the DL CFR configured for retransmission of TB (S130).

UE may monitor group common and/or UE-specific PDCCH using the TCI state for a search space configured in DL CFR to receive a retransmission of the TB. The network side may retransmit the TB to one of the UEs in the group by UE-specific PDCCH. Meanwhile, other UE(s) may not receive the retransmission of the TB, as it has successfully received the TB.

When the UE receives the PDCCH for the retransmission of the TB, the UE may receive the PDSCH scheduled by the DCI of the PDCCH. When the UE successfully decodes the TB in the PDSCH, the UE may consider that the decoded TB is associated with MTCH, MRB, TMGI, G-RNTI and/or short ID of MBS service, based on mapping between MBS service and HPN (HARQ Process Number) indicated by the DCI, and/or mapping between MBS service and short ID(s) indicated by the DCI.

When TB decoding in PDSCH transmission occasion is successful, the UE may transmit HARQ ACK to the network side through PUCCH resource in UL CFR configured according to the above-described procedure. Using PUCCH resource, the UE may transmit HARQ-ACK for other PDSCH transmission such as unicast SPS PDSCH, dynamic unicast PDSCH, PTP retransmission and/or dynamic group common PDSCH.

In this case, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, the UE may construct a codebook based on one or more of the above-described options/embodiments.

For example, the operation of the UE (100 or 200 in FIG. 11) of the above-described step S130 receiving TB retransmission from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive TB retransmission, and the one or more transceivers 106 may receive TB retransmission from the network side.

General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods included in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machineexecutable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for receiving downlink data by a terminal in a wireless communication system, the method comprising:

   receiving, from a network, configuration information on a common frequency resource (CFR) for a group-common transmission, associated with a terminal-dedicated bandwidth part (BWP);
   receiving a first physical downlink shared channel (PDSCH) on the CFR based on first downlink control information (DCI); and
   receiving a second PDSCH on the BWP based on second DCI,
   wherein the receiving the first PDSCH includes rate matching based on the CFR, and
   wherein the receiving the second PDSCH includes rate matching based on the BWP.

2. The method of claim 1, wherein:
   the rate matching includes limited buffer rate matching (LBRM).

3. The method of claim 1, wherein:

   the rate matching based on the CFR includes applying a BWP-level rate matching pattern to the CFR,
   the rate matching based on the BWP includes applying the BWP-level rate matching pattern to the BWP.

4. The method of claim 1, wherein:

   the first DCI includes information indicating a rate matching pattern group applied to the rate matching based on the CFR,
   the second DCI includes information indicating a rate matching pattern group applied to the rate matching based on the BWP.

5. The method of claim 1, wherein:

   the first DCI is CRC(cyclic redundancy check)-scrambled by a group-radio network temporary identifier (G-RNTI) or a group-configured scheduling-RNTI (G-CS-RNTI),
   the second DCI is CRC-scrambled by a cell-RNTI (C-RNTI) or a CS-RNTI.

6. The method of claim 5, wherein:

   the first DCI and the first PDSCH are associated with the group common transmission,
   the second DCI and the second PDSCH are associated with a terminal-specific transmission.

7. The method of claim 6, wherein:

   hybrid automatic repeat and request acknowledgement (HARQ-ACK) information for the group common transmission is transmitted to the network based on whether a transport block (TB) received through the first PDSCH being successfully decoded,
   the second DCI is received from the network after transmission of the HARQ-ACK information for the group common transmission.

8. The method of claim 7, wherein:
   based on a HARQ process number indicated by the second DCI being the same as a HARQ process number indicated by the first DCI, the second PDSCH transmission corresponds to a retransmission of the first PDSCH transmission.

9. A terminal for receiving downlink data in a wireless communication system, the terminal comprising:

   at least one transceiver; and
   at least one processor connected to the at least one transceiver,
   wherein the at least one processor is configured to:

      receive, through the at least one transceiver, from a network, configuration information on a common frequency resource (CFR) for a group-common transmission, associated with a terminal-dedicated bandwidth part (BWP);
receive, through the at least one transceiver, a first physical downlink shared channel (PDSCH) on the CFR based on first downlink control information (DCI); and
receive, through the at least one transceiver, a second PDSCH on the BWP based on second DCI,

wherein the receiving the first PDSCH includes rate matching based on the CFR, and
wherein the receiving the second PDSCH includes rate matching based on the BWP.

10. A method for transmitting downlink data by a base station in a wireless communication system, the method comprising:

transmitting, to a terminal, configuration information on a common frequency resource (CFR) for a group-common transmission, associated with a terminal-dedicated bandwidth part (BWP);
transmitting, to the terminal, a first physical downlink shared channel (PDSCH) on the CFR based on first downlink control information (DCI); and
transmitting, to the terminal, a second PDSCH on the BWP based on second DCI,
wherein the transmitting the first PDSCH includes rate matching based on the CFR, and
wherein the transmitting the second PDSCH includes rate matching based on the BW P.

11. A base station for transmitting downlink data in a wireless communication system, the base station comprising:

at least one transceiver; and
at least one processor connected to the at least one transceiver,
wherein the at least one processor is configured to:

transmit, through the at least one transceiver, to a terminal, configuration information on a common frequency resource (CFR) for a group-common transmission, associated with a terminal-dedicated bandwidth part (BWP);
transmit, through the at least one transceiver, to the terminal, a first physical downlink shared channel (PDSCH) on the CFR based on first downlink control information (DCI); and
transmit, through the at least one transceiver, to the terminal, a second PDSCH on the BWP based on second DCI,

wherein the transmitting the first PDSCH includes rate matching based on the CFR, and
wherein the transmitting the second PDSCH includes rate matching based on the BW P.

12. A processing unit configured to control a terminal in a wireless communication system, the processing unit comprising:

at least one processor; and
at least one computer memory which is operably connected to the at least one processor and stores instructions for performing a method according to any one of Claim 1 to Claim 8 based on being executed by the at least one processor.

13. At least one non-transitory computer readable medium storing at least one instruction, wherein:
the at least one instruction controls a device to perform a method according to any one of Claim 1 to Claim 8 in a wireless communication system by being executed by at least one processor.

FIG.1

FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

FIG.5

FIG.6

INITIAL CELL SEARCH — PSS/SSS& [DL RS]& PBCH — S601

SYSTEM INFORMATION RECEPTION — PDCCH/ PDSCH (BCCH) — S602

RANDOM ACCESS PROCEDURE
- PRACH — S603
- PDCCH/ PDSCH — S604
- PUSCH — S605
- PDCCH/ PDSCH — S606

GENERAL DL/UL Tx/Rx
- PDCCH/ PDSCH — S607
- PUSCH/ PUCCH — S608

· DL/UL ACK/NACK
· UE CQI /PMI RI REPORT
  USING PUSCH AND PUCCH

FIG.7

| Receive configuration information on CFR associated with BWP | S710 |
| Transmit first PDSCH on CFR based on first DCI | S720 |
| Transmit second PDSCH on BWP based on second DCI | S730 |

# FIG.8

```
┌─────────────────────────────────────┐
│  Transmit configuration information on │ ⌐⌐ S810
│       CFR associated with BWP         │
└─────────────────────────────────────┘
                  │
                  ▼
┌─────────────────────────────────────┐
│      Receive first PDSCH on CFR       │ ⌐⌐ S820
│          based on first DCI           │
└─────────────────────────────────────┘
                  │
                  ▼
┌─────────────────────────────────────┐
│     Receive second PDSCH on BWP       │ ⌐⌐ S830
│         based on second DCI           │
└─────────────────────────────────────┘
```

FIG.9

(a)

| group common DCI | group common PDSCH | | HARQ-ACK |

| group common DCI | group common PDSCII | | HARQ-ACK |

(b)

Cell 1 / BWP 1

| group common DCI | group common PDSCH | HARQ-ACK |

Cell 2 / BWP 2

| UE-specific DCI | PTP ReTx PDSCH |

(c)

Cell 1 / BWP 1

| group common DCI | group common PDSCH | HARQ-ACK | PTP ReTx PDSCH |

Cell 2 / BWP 2

| UE-specific DCI |

(d)

Cell 1 / BWP 1

| group common DCI | group common PDSCH | HARQ-ACK | UE-specific DCI |

Cell 2 / BWP 2

| PTP ReTx PDSCH |

FIG.10

Network Side            UE

MBS service related message    S105

Configuration information    S110

Control information    S115

TB    S120

HARQ-ACK    S125

TB retransmission    S130

FIG.11

## INTERNATIONAL SEARCH REPORT

| International application No. |
|---|
| **PCT/KR2022/011611** |

**A. CLASSIFICATION OF SUBJECT MATTER**

**H04W 72/12**(2009.01)i; **H04L 5/00**(2006.01)i; **H04L 1/18**(2006.01)i

According to International Patent Classification (IPC) or to both national classification and IPC

**B. FIELDS SEARCHED**

Minimum documentation searched (classification system followed by classification symbols)

H04W 72/12(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말 전용 대역폭 부분(UE dedicated bandwidth part), 그룹 통신(group communication), 공통 주파수 자원(common frequency resource), PDSCH, LBRM, G-RNTI, C-RNTI

**C. DOCUMENTS CONSIDERED TO BE RELEVANT**

| Category* | Citation of document, with indication, where appropriate, of the relevant passages | Relevant to claim No. |
|---|---|---|
| Y A | CMCC. Summary# on mechanisms to support group scheduling for RRC_CONNECTED UEs for NR MBS. R1-2106169, 3GPP TSG RAN WG1 #105-e, e-Meeting. 26 May 2021.<br>See pages 1-22 and 108. | 1-2,4-6,9-13<br>3,7-8 |
| Y | KR 10-2019-0127557 A (ASUSTEK COMPUTER INCORPORATION) 13 November 2019 (2019-11-13)<br>See paragraphs [0400]-[0401], [0483] and [0654]; and claims 1 and 16. | 1-2,4-6,9-13 |
| A | LENOVO et al. On group scheduling mechanism for NR MBS. R1-2104865, 3GPP TSG RAN WG1 #105-e, E-meeting. 12 May 2021.<br>See sections 2-3. | 1-13 |
| A | QUALCOMM INCORPORATED. View on group scheduling for Multicast RRC_CONNECTED UEs. R1-2104695, 3GPP TSG RAN WG1 #105-e, e-Meeting. 12 May 2021.<br>See sections 2-3. | 1-13 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2022** | **16 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/011611** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0133042 A (LG ELECTRONICS INC.) 29 November 2019 (2019-11-29) See paragraphs [0487]-[0488]; and claim 1. | 1-13 |

**INTERNATIONAL SEARCH REPORT**
Information on patent family members

| International application No. |
|---|
| **PCT/KR2022/011611** |

| Patent document cited in search report | | | Publication date (day/month/year) | Patent family member(s) | | | Publication date (day/month/year) |
|---|---|---|---|---|---|---|---|
| KR | 10-2019-0127557 | A | 13 November 2019 | CN | 110446269 | A | 12 November 2019 |
| | | | | EP | 3565172 | A1 | 06 November 2019 |
| | | | | EP | 3565172 | B1 | 25 November 2020 |
| | | | | JP | 2019-195167 | A | 07 November 2019 |
| | | | | JP | 6756001 | B2 | 16 September 2020 |
| | | | | KR | 10-2206806 | B1 | 25 January 2021 |
| | | | | TW | 201947965 | A | 16 December 2019 |
| | | | | TW | I729383 | B | 01 June 2021 |
| | | | | US | 2019-0342907 | A1 | 07 November 2019 |
| KR | 10-2019-0133042 | A | 29 November 2019 | CN | 110651522 | A | 03 January 2020 |
| | | | | EP | 3606235 | A1 | 05 February 2020 |
| | | | | EP | 3606235 | B1 | 08 December 2021 |
| | | | | JP | 2020-519158 | A | 25 June 2020 |
| | | | | JP | 6883118 | B2 | 09 June 2021 |
| | | | | KR | 10-2234254 | B1 | 31 March 2021 |
| | | | | US | 10951377 | B2 | 16 March 2021 |
| | | | | US | 2020-0067676 | A1 | 27 February 2020 |
| | | | | WO | 2018-203650 | A1 | 08 November 2018 |

Form PCT/ISA/210 (patent family annex) (July 2022)